# EUROPÄISCHE PATENTSCHRIFT

(11) **EP 3 164 263 B1**
(45) Veröffentlichungstag und Bekanntmachung des Hinweises auf die Patenterteilung: **06.06.2018**
(21) Anmeldenummer: 15728514.9
(22) Anmeldetag: 11.06.2015
(51) Int. Cl.: B32B 17/10, B60J 1/08, H05B 3/12, H05B 3/26, H05B 3/84, H05B 3/86, C03C 27/12

(54) **BEHEIZBARE LAMINIERTE SEITENSCHEIBE**
HEATABLE LAMINATED SIDE WINDOW
VITRAGE EN VERRE FEUILLETÉ LATÉRALE CHAUFFABLE

(30) Priorität: 01.07.2014 EP 14175181
(43) Veröffentlichungstag der Anmeldung: 10.05.2017
(73) Patentinhaber: Saint-Gobain Glass France, 92400 Courbevoie (FR)
(72) Erfinder: KLEIN, Marcel, 52499 Baesweiler (DE); REUL, Bernhard, 52134 Herzogenrath (DE); STELLING, Bernd, 52134 Herzogenrath (DE)
(74) Vertreter: Gebauer, Dieter Edmund
(86) Internationale Anmeldenummer: PCT/EP2015/063043
(87) Internationale Veröffentlichungsnummer: WO 2016/000927

(56) Entgegenhaltungen:
- EP-A1- 1 404 153
- EP-A1- 2 584 864
- EP-A2- 0 099 034
- WO-A2-2005/055667
- DE-A1- 10 126 869
- DE-T2- 69 325 837

## Beschreibung

Die Erfindung betrifft eine beheizbare laminierte Seitenscheibe, ein Verfahren zu deren Herstellung und deren Verwendung.

Kraftfahrzeuge verfügen typischerweise über öffenbare Seitenfenster. Solche Seitenfenster sind mit einer Seitenscheibe versehen, welche sich durch im Wesentlichen vertikale Verschiebung bewegen lässt, wodurch das Seitenfenster geöffnet und geschlossen werden kann.

Seitenscheiben können als laminierte Verbundsicherheitsscheiben ausgestaltet sein, welche eine Außenscheibe und eine Innenscheibe umfassen, die über eine thermoplastische Zwischenschicht, typischerweise eine PVB-Folie, miteinander verbunden sind. Es sind auch beheizbare laminierte Seitenscheiben bekannt, welche mit Heizdrähten ausgestattet sind. Die Heizdrähte sind in die thermoplastische Zwischenschicht eingebettet. Zur elektrischen Kontaktierung der Heizdrähte sind typischerweise Stromsammelschienen vorgesehen. Geeignete Stromsammelschienen sind beispielsweise Streifen einer Kupferfolie, welche mit einer externen Spannungsquelle verbunden werden. Die Heizdrähte verlaufen zwischen den Stromsammelschienen, so dass ein Strom durch die Heizdrähte fließen kann, wodurch die Heizwirkung erreicht wird.

Es ist bislang üblich, die Stromsammelschienen einer beheizbaren, laminierten Seitenscheibe entlang der Unterkante der Seitenscheibe anzuordnen, welche stets von der Fahrzeugkarosserie verdeckt ist. So bleibt die elektrische Kontaktierung der beheizbaren Scheibe stets verborgen. Solche Seitenscheiben sind beispielsweise aus DE10126869A1 oder WO2005055667A2 bekannt. Offenbar herrscht die Auffassung vor, dass Stromsammelschienen entlang anderer Seitenkanten als der Unterkante im geöffneten Zustand des Seitenfensters für den Betrachter sichtbar sind, was aus ästhetischen Gründen nicht akzeptabel ist.

Die herkömmlichen beheizbaren Seitenscheiben mit den Stromsammelschienen entlang der Unterkannte weisen eine Reihe von Nachteilen auf. Die räumliche Nähe der beiden entgegengesetzt gepolten Stromsammelschienen setzt aufwendige Isolierungsmaßnahmen voraus, um Kurzschlüsse dauerhaft zu vermeiden. Außerdem müssen die Heizdrähte ausgehend von der Unterkante mäanderartig über die Scheibe zurück zur Unterkante geführt werden, um die Scheibe auf ihrer gesamten Fläche zu beheizen. Ein solcher mäanderartige Verlauf kann aus ästhetischen Gründen unerwünscht sein. Außerdem können sich bei starken lokalen Krümmungen des Heizdrahtes Stellen mit lokaler Überhitzung ausbilden (sogenannte *hotspots*).

EP 2584864 A1, DE 69325837 T2 und EP 0099034 A2 zeigen jeweils eine Windschutzscheibe mit an den Seitenkanten angeordneten Stromsammelschienen.

Der vorliegenden Erfindung liegt die Aufgabe zugrunde, eine verbesserte beheizbare, laminierte Seitenscheibe bereitzustellen.

Die Aufgabe der vorliegenden Erfindung wird erfindungsgemäß durch eine beheizbare laminierte Seitenscheibe gemäß Anspruch 1 gelöst. Bevorzugte Ausführungen gehen aus den Unteransprüchen hervor.

Die erfindungsgemäße beheizbare laminierte Seitenscheibe ist für ein öffenbares Seitenfenster eines Fahrzeugs vorgesehen. Darunter wird ein Seitenfenster verstanden, welches sich durch im Wesentlichen vertikale Verschiebung der Seitenscheibe in die Karosserietür hinein öffnen und wieder schließen lässt.

Die beheizbare laminierte Seitenscheibe weist eine Oberkante, einer Unterkante, einer Vorderkante und einer Hinterkante auf. Mit Oberkante wird die Seitenkante der Seitenscheibe bezeichnet, welche in Einbaulage nach oben weist. Mit Unterkante wird die Seitenkante bezeichnet, welche in Einbaulage nach unten zum Erdboden weist. Mit Vorderkante wird die Seitenkante bezeichnet, welche in Fahrtrichtung nach vorne gerichtet ist. Mit Hinterkante wird die Seitenkante bezeichnet, welche in Fahrtrichtung nach hinten gerichtet ist.

Die beheizbare laminierte Seitenscheibe umfasst mindestens eine Außenscheibe und eine Innenscheibe, welche über eine thermoplastische Zwischenschicht miteinander verbunden sind. Mit Innenscheibe wird dabei diejenige Scheibe bezeichnet, welche in Einbaulage dem Innenraum des Fahrzeugs zugewandt ist. Mit Außenscheibe wird diejenige Scheibe bezeichnet, welche in Einbaulage der äußeren Umgebung des Fahrzeugs zugewandt ist. Mindestens ein Heizdraht ist in die Zwischenschicht eingebettet. Der Heizdraht verläuft zwischen einer ersten Stromsammelschiene und einer zweiten Stromsammelschiene und ist mit den Stromsammelschienen elektrisch leitend verbunden. Die Stromsammelschienen sind dafür vorgesehen, mit einer externen Spannungsquelle verbunden zu werden, so dass ein Strom zwischen den Sammelschienen durch den Heizdraht fließt. Die Seitenscheibe kann so bequem enteist oder von Feuchtigkeitsbeschlag befreit werden.

Erfindungsgemäß sind die erste Stromsammelschiene und die zweite Stromsammelschiene entlang der Vorderkante oder der Hinterkante der Seitenscheibe angeordnet. Eine Stromsammelschiene ist im Sinne der Erfindung dann entlang einer Seitenkante angeordnet, wenn sie einen geringen Abstand von der Seitenkante aufweist (der mittlere Abstand zur besagten Seitenkante ist geringer als zu allen anderen Seitenkanten) und ihre Erstreckungsrichtung im Wesentlichen der Richtung der Seitenkante folgt.

Der Erfindung liegt die überraschende Erkenntnis zugrunde, dass Stromsammelschienen auch entlang der Vorderkante und der Hinterkante einer Seitenscheibe angeordnet werden können, ohne im geöffneten Zustand der Scheibe für den Betrachter sichtbar zu sein. Solange der Abstand der Stromsammelschienen von der Kante nicht zu groß ist, werden die Stromsammelschienen vorteilhaft von Karosserieteilen der Fahrzeugtür sowie den üblicherweise bei Fahrzeugfenstern verwendeten Dichtlippen verdeckt. Die elektrische Kontaktierung ist somit in keinem Zustand der Scheibe sichtbar, wodurch die Seitenscheibe den ästhetischen Ansprüchen an Fahrzeugscheiben genügt.

In einer vorteilhaften Ausgestaltung beträgt der maximale Abstand der Stromsammelschienen von derjenigen Seitenkante, entlang derer sie angeordnet sind, kleiner 3 cm, bevorzugt kleiner 2,5 cm, besonders bevorzugt kleiner 2 cm. Der maximale Abstand im Sinne der Erfindung wird zwischen der Seitenkante der Seitenscheibe und der von ihr abgewandten Kante der Stromsammelschiene gemessen. Dieser Abstand ist ausreichend gering, so dass die Stromsammelschienen mit der elektrischen Kontaktierung in einem Bereich angeordnet sind, der durch Karosserieteile und Dichtlippen typischer Kraftfahrzeug-Seitenfenster abgedeckt ist.

Die Stromsammelschienen dürfen aber auch nicht zu dicht an der Seitenkante positioniert sein, weil sonst die Verbindung der Scheiben gestört wird und Luft über die Seitenkante in den Verbund eindringen kann. In einer vorteilhaften Ausgestaltung beträgt der minimale Abstand der Stromsammelschienen von derjenigen Seitenkante, entlang derer sie angeordnet sind, größer 3 mm, bevorzugt größer 5 mm. Damit werden gute Ergebnisse erzielt. Der minimale Abstand im Sinne der Erfindung wird zwischen der Seitenkante der Seitenscheibe und der ihr zugewandten Kante der Stromsammelschiene gemessen.

Obwohl die Erfindung mit einem einzigen Heizdraht zu realisieren ist, weist die erfindungsgemäße Seitenscheibe typischerweise mehrere Heizdrähte auf, welche zwischen den Stromsammelschienen verlaufen. Durch die Stromsammelschienen werden sämtliche Heizdrähte mit Strom versorgt, wofür dann nur der Anschluss zweier Verbindungskabel zur externen Spannungsversorgung nötig ist.

In einer bevorzugten Ausgestaltung ist eine Stromsammelschiene entlang der Vorderkante und die andere Stromsammelschiene entlang der Hinterkante der Seitenscheibe angeordnet. So werden die zur Verfügung stehenden, nicht sichtbaren Bereiche der Seitenscheibe optimal genutzt. Zudem können die Heizdrähte ohne starke Krümmungen und Schleifen von der Vorderkante zur Hinterkante geführt werden, was ästhetisch ansprechend ist, eine homogene Verteilung der Heizleistung erleichtert und die Gefahr von lokaler Überhitzung verringert.

Die Heizdrähte können in diesem Fall in einer bevorzugten Ausführung ohne starke Krümmungen von der ersten Stromsammelschiene zur zweiten Stromsammelschiene verlaufen. Aufgrund der komplexen Form von Seitenscheiben wird typischerweise zumindest ein Teil der Heizdrähte nicht vollkommen geradlinig zwischen den Stromsammelschienen verlaufen, um die Heizwirkung möglichst über die gesamte Scheibe zu verteilen. So werden beispielsweise die Heizdrähte nahe der typischerweise gekrümmten Oberkante eine leichte, an die Oberkante angepasste Krümmung aufweisen.

Alternativ können die Heizdrähte aber auch einen mäanderförmigen Verlauf aufweisen. Dabei verläuft ein Heizdraht ausgehend von der ersten Stromsammelschiene in die Nähe der zweiten Stromsammelschiene. Dort verläuft der Heizdraht in der Art einer Kehrschleife ("U-Turn") ohne die zweite Stromsammelschiene elektrisch zu kontaktieren und verläuft zurück in die Nähe der ersten Stromsammelschiene. Dort verläuft der Heizdraht abermals in der Art einer Kehrschleife ohne die erste Stromsammelschiene elektrisch zu kontaktieren und verläuft wieder zur zweiten Stromsammelschiene. Der Heizdraht kontaktiert entweder an dieser Stelle die zweite Stromsammelschiene oder verläuft ein weiteres Mal oder mehrere weitere Male mäanderartig zwischen den Stromsammelschienen hin und her, bevor er die zweite Stromsammelschiene kontaktiert. Der Vorteil einer solchen mäanderartigen Führung der Heizdrähte liegt in der Verlängerung des Heizdrahtes im Vergleich mit einer direkten Verbindung der Stromsammelschienen. Durch diese Verlängerung kann die Heizleistung reduziert werden, wenn sie bei einer gegebenen angelegten elektrischen Spannung und gegebener Dicke und Material der Heizdrähte bei direkter Verbindung der Stromsammelschienen höher als gewünscht wäre.

In einer alternativen bevorzugten Ausgestaltung sind beide Stromsammelschienen entlang derselben Seitenkante der Seitenscheibe angeordnet, also entweder entlang der Vorderkante oder entlang der Hinterkante. Die Heizdrähte verlaufen dann schleifenartig oder mäanderförmig ausgehend von der ersten Stromsammelschiene über die Scheibe zur zweiten Stromsammelschiene. In einer besonders bevorzugten Ausführung sind die beiden Stromsammelschienen in Durchsicht durch die Scheibe überlappend, insbesondere kongruent angeordnet. Um einen Kurzschluss zu vermeiden, sind die beiden Stromsammelschienen dabei bevorzugt auf unterschiedlichen Seiten der thermoplastischen Zwischenschicht angeordnet. Der Heizdraht muss dann einmal durch die thermoplastische Zwischenschicht hindurch geführt werden.

Alternativ können die beiden Stromsammelschienen auch entlang derselben Seitenkante angeordnet sein und dennoch auf derselben Seite der thermoplastischen Zwischenschicht angeordnet sein. Die Stromsammelschienen können dabei überlappend, kongruent oder auch nebeneinander angeordnet sein. Ein Kurzschluss zwischen überlappenden Stromsammelschienen oder ein unerwünschter Kontakt eines Heizdrahts zu einer Stromsammelschiene kann durch geeignete Isolierungsmaßnahmen verhindert werden. Eine solche Isolierungsmaßnahme ist beispielsweise das Anbringen einer elektrisch isolierenden Folie, die bevorzugt Polyimid (PI) und/oder Polyisobutylen (PIB) enthält und eine Dicke von 10 µm bis 200 µm aufweist.

In einer bevorzugten Ausgestaltung sind die Stromsammelschienen als Streifen einer elektrisch leitfähigen Folie ausgebildet. Die leitfähige Folie enthält bevorzugt Aluminium, Kupfer, verzinntes Kupfer, Gold, Silber, Zink, Wolfram und/oder Zinn oder Legierungen davon, besonders bevorzugt Kupfer.

Die Dicke der Stromsammelschienen beträgt bevorzugt von 10 µm bis 500 µm, besonders bevorzugt von 30 µm bis 200 µm, beispielsweise 50 µm oder 100 µm. Stromsammelschienen aus elektrisch leitfähigen Folien mit diesen Dicken sind technisch einfach zu realisieren und weisen eine vorteilhafte Stromtragfähigkeit auf.

Die Länge der Stromsammelschienen hängt von der Gestaltung der Seitenscheibe ab, insbesondere von der Länge der Kante, entlang derer die Stromsammelschiene angeordnet ist, und die Anzahl der zu kontaktierenden Heizdrähte, und kann vom Fachmann im Einzelfall geeignet gewählt werden. Unter der Länge der typischerweise streifenartigen Stromsammelschienen wird ihre längere Dimension verstanden, entlang derer sie üblicherweise mit den verschiedenen Heizdrähten oder Heizdrahtabschnitten kontaktiert sind.

Die Breite der Stromsammelschienen beträgt bevorzugt von 2 mm bis 20 mm, besonders bevorzugt von 5 mm bis 10 mm. Damit werden gute Ergebnisse erzielt hinsichtlich der Heizleistung, aber auch der optischen Unauffälligkeit.

Die Stromsammelschienen können direkt oder beispielsweise über eine Lotmasse oder einen elektrisch leitfähigen Kleber mit den Heizdrähten elektrisch leitend verbunden sein.

In einer vorteilhaften Ausgestaltung nimmt der Abstand benachbarter Heizdrähte oder benachbarter, im Wesentlichen parallel zueinander verlaufender Heizdrahtabschnitte von der Hinterkante in Richtung zur Vorderkante zumindest abschnittsweise ab. Benachbarte Heizdrähte oder Heizdrahtabschnitte weisen also im Bereich der Vorderkante einen geringen Abstand zueinander auf als im Bereich der Hinterkante, was zu einer höheren Heizleistung infolge der hohen Heizdrahtdichte im Bereich der Vorderkante führt. Durch diese leicht zu realisierende Maßnahme kann die Heizleistung gleichsam im Bereich der Vorderkante konzentriert werden. Insbesondere für vordere Seitenscheiben, also Seitenscheiben des Fahrer- und Beifahrerplatzes, ist diese Ausgestaltung vorteilhaft, weil so im Bereich der Vorderkante eine schnellere Enteisung oder Befreiung von Beschlag erreicht wird und der Blick auf die Seitenspiegel des Fahrzeugs schneller freigegeben wird.

Erfindungsgemäß nimmt der Abstand benachbarter Heizdrähte oder benachbarter Heizdrahtabschnitte im Verlauf von der Hinterkante zur Vorderkante monoton ab. Die Abnahme kann streng monoton sein, aber auch Abschnitte mit konstantem Abstand aufweisen, insbesondere im hinteren Bereich der Scheibe. Grundsätzlich kann die Scheibe auch Bereiche aufweisen, in denen der Abstand benachbarter Heizdrähte oder benachbarter Heizdrahtabschnitte zunimmt. Durch die Gestaltung der Abstände kann die Scheibe mit einem Heizleistungsprofil versehen werden, was an die Erfordernisse des Einzelfalls angepasst ist. Die bevorzugte Abnahme der Abstände tritt zumindest im vorderen Bereich der Scheibe auf, um eine schnelle Enteisung dieses vorderen Bereichs und einen freien Blick auf die Seitenspiegel sicherzustellen.

Der Abstand benachbarter Heizdrähte oder Heizdrahtabschnitte beträgt im Bereich der Hinterkante bevorzugt von 20 mm bis 42 mm, im Bereich der Vorderkante von 8 mm bis 18 mm. Dadurch wird eine vorteilhafte Verteilung der Heizleistung erreicht, die zu einer schnellen Enteisung des Vorderbereichs führt und die Anforderungen der Fahrzeugindustrie erfüllt. Ist jeweils eine Sammelschiene entlang der Vorderkante und der Hinterkante ausgerichtet, so können die Abstände direkt an die jeweilige Sammelschiene angrenzend gemessen werden. Sind beide Sammelschienen entlang derselben Kante angeordnet, so kann der Abstand im Bereich dieser Kante direkt angrenzend an diejenige Sammelschiene mit dem größeren Abstand zur Kante gemessen werden. Der Abstand im Bereich der anderen Kante wird an der der Kante am nächsten liegenden Stelle gemessen, wobei etwaige Kehrschleifen des Heizdrahtes natürlich nicht zu berücksichtigen sind. Die vorstehenden Begriffe der Abstände im Bereich eine Kante sind vom Fachmann entsprechend auszulegen.

Der Abstand benachbarter Heizdrähte oder Heizdrahtabschnitte beträgt bevorzugt im Bereich der Vorderkante von 25% bis 90% des Abstands im Bereich der Hinterkante, besonders bevorzugt von 30% bis 50%.

Die Heizleistung im Bereich der Vorderkante beträgt bevorzugt von 450 W/m² bis 1100 W/m², im Bereich der Hinterkante von 50 W/m² bis 450 W/m². Damit wird eine vorteilhafte Verteilung der Heizleistung erreicht.

In einer bevorzugten Ausgestaltung der Erfindung erfolgt der Anschluss der Verbindungskabel zur externen Spannungsversorgung im Bereich der Unterkante. Dadurch können die Verbindungskabel in der Fahrzeugkarosserie verborgen werden. Die Seitenscheibe weist dazu bevorzugt zumindest eine Zuleitung auf, welche mit einer Stromsammelschiene elektrisch kontaktiert ist und ausgehend von den Stromsammelschienen zur Unterkante verläuft. Bevorzugt ist jede Stromsammelschiene mit solch einer Zuleitung versehen. Die Zuleitungen können beispielsweise in Form einer geraden Strecke zur Unterkante verlaufen, um dort (beispielsweise im Bereich der Projektion der Stromsammelschiene auf die Unterkante) kontaktiert zu werden. Die Zuleitungen können bereits innerhalb des Laminats, also vor Erreichen der Unterkante enden und mit einem Flachleiter kontaktiert sein. Alternativ können sich die Zuleitungen über die Unterkante hinaus erstrecken zur Kontaktierung mit den externen Verbindungskabeln außerhalb des Laminats.

Die den Stromsammelschienen entgegengesetzten Enden der Zuleitungen weisen in einer bevorzugten Ausgestaltung einen Abstand voneinander von kleiner oder gleich 30 mm, besonders bevorzugt kleiner oder gleich 20 mm auf, ganz besonders bevorzugt kleiner oder gleich 12 mm auf. Die Zuleitungen können dazu, wenn die Stromsammelschienen an verschiedenen Kanten der Seitenscheibe angeordnet sind, einen Abschnitt aufweisen, der entlang der Unterkante angeordnet ist. So können die Anschlussstellen der externen Verbindungskabel für beide Stromsammelschienen in räumliche Nähe zueinander geführt werden, was für den elektrischen Anschluss vorteilhaft sein kann.

Die Zuleitung ist bevorzugt als Streifen einer elektrisch leitfähigen Folie ausgebildet. Die leitfähige Folie enthält bevorzugt Aluminium, Kupfer, verzinntes Kupfer, Gold, Silber, Zink, Wolfram und/oder Zinn oder Legierungen davon, besonders bevorzugt Kupfer. Die Dicke der Folie beträgt bevorzugt von 10 µm bis 500 µm, besonders bevorzugt von 30 µm bis 200 µm, beispielsweise 50 µm oder 100 µm. Die Breite der Zuleitungen beträgt bevorzugt von 2 mm bis 20 mm, besonders bevorzugt von 5 mm bis 10 mm. Vorteilhafterweise bestehen die Zuleitungen aus der gleichen Folie wie die Stromsammelschienen.

In einer bevorzugten Ausgestaltung enthält der Heizdraht Aluminium, Kupfer, verzinntes Kupfer, Gold, Silber, Zink, Wolfram und/oder Zinn oder Legierungen davon, besonders bevorzugt Kupfer und/oder Wolfram. Das ist für die Heizleistung vorteilhaft.

Die Dicke des Heizdrahts beträgt bevorzugt von 10 µm bis 200 µm, besonders bevorzugt von 20 µm bis 100 µm, beispielsweise 30 µm oder 70 µm. Damit werden gute Heizwirkungen erreicht. Zudem sind solche Drähte hinreichend dünn, um optisch unauffällig zu sein.

Die Stromsammelschienen können zwischen dem kontaktierten Bereich des Heizdrahts und der die Zwischenschicht ausbildenden thermoplastischen Folie angeordnet sein. Alternativ kann der kontaktierte Bereich des Heizdrahts zwischen der Stromsammelschiene und der die Zwischenschicht ausbildenden thermoplastischen Folie angeordnet sein. Anstelle einer einzelnen Stromsammelschiene können auch zwei Stromsammelschienen verwendet werden, zwischen denen der kontaktierte Bereich des Heizdrahts sandwichartig angeordnet ist. In diesem Fall können die einzelnen Stromsammelschienen eine geringere Dicke aufweisen als bei Verwendung jeweils einer einzigen Stromsammelschiene.

In einer bevorzugten Ausgestaltung der Erfindung beträgt die Heizleistung der Scheibe mindestens 250 W/m². Damit wird eine vorteilhafte Heizwirkung erzielt.

Die Außenscheibe und / oder die Innenscheibe enthält bevorzugt Glas, insbesondere Kalk-Natron-Glas, oder Kunststoffe, vorzugsweise starre Kunststoffe, insbesondere Polycarbonat, oder Polymethylmethacrylat.

Die Dicke der Scheiben kann breit variieren und so hervorragend den Erfordernissen im Einzelfall angepasst werden. Vorzugsweise betragen die Dicken der Außenscheibe und der Innenscheibe von 0,5 mm bis 10 mm und bevorzugt von 1 mm bis 5 mm, ganz besonders bevorzugt von 1,4 mm bis 3 mm.

Die Außenscheibe, die Innenscheibe oder die Zwischenschicht können klar und farblos, aber auch getönt, getrübt oder gefärbt sein. Die Außenscheibe und die Innenscheibe können aus nicht vorgespanntem, teilvorgespanntem oder vorgespanntem Glas bestehen.

Die Zwischenschicht wird durch mindestens eine thermoplastische Verbindungsfolie gebildet. Die thermoplastische Verbindungsfolie enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt PVB. Die Dicke der thermoplastischen Verbindungsfolie beträgt bevorzugt von 0,2 mm bis 2 mm, besonders bevorzugt von 0,3 mm bis 1 mm, beispielsweise 0,38 mm oder 0,76 mm.

Die erfindungsgemäße Seitenscheibe kann neben der durch die Heizdrähte bewirkten Heizfunktion weitere Funktionalitäten aufweisen. In einer vorteilhaften Ausgestaltung weist die Seitenscheibe eine reflektierende Beschichtung für den Infrarotbereich auf. Eine solche Beschichtung kann auf eine Oberfläche der Außenscheibe oder Innenscheibe aufgebracht sein, bevorzugt auf einer zur Zwischenschicht hingewandten Oberfläche, um die Beschichtung vor Korrosion und mechanischer Einwirkung zu schützen. Alternativ kann die Beschichtung in Form einer beschichteten thermoplastischen Folie, beispielsweise aus Polyethylenterephthalat (PET), in den Verbund eingebracht sein. In diesem Fall ist die beschichtete Folie bevorzugt zwischen einer ersten und einer zweiten thermoplastischen Verbindungsfolie angeordnet. IR-reflektierende Beschichtungen weisen typischerweise zumindest eine elektrisch leitfähige Schicht auf. Die Beschichtung kann zusätzlich dielektrische Schichten aufweisen, die beispielsweise zur Regulierung des Schichtwiderstands, zum Korrosionsschutz oder zur Verminderung der Reflexion dienen. Die leitfähige Schicht enthält bevorzugt Silber oder ein elektrisch leitfähiges Oxid (transparent conductive oxide, TCO) wie Indium-Zinn-Oxid (indium tin oxide, ITO). Die leitfähige Schicht weist bevorzugt eine Dicke von 10 nm bis 200 nm auf. Zur Verbesserung der Leitfähigkeit bei gleichzeitig hoher Transparenz kann die Beschichtung mehrere elektrisch leitfähige Schichten aufweisen, welche durch zumindest eine dielektrische Schicht voneinander getrennt sind. Die leitfähige Beschichtung kann beispielsweise zwei, drei oder vier elektrisch leitfähige Schichten enthalten. Typische dielektrische Schichten enthalten Oxide oder Nitride, beispielsweise Siliziumnitrid, Siliziumoxid, Aluminiumnitrid, Aluminiumoxid, Zinkoxid oder Titanoxid. Die Beschichtung weist bevorzugt eine kleinere Fläche als die Seitenscheibe auf, so dass ein umlaufender Randbereich mit einer Breite von bevorzugt 0,5 mm bis 10 mm nicht mit der Beschichtung versehen ist. Die leitfähige Beschichtung ist dadurch innerhalb der Zwischenschicht vor Kontakt mit der umgebenden Atmosphäre geschützt, was im Hinblick auf die Vermeidung von Korrosion vorteilhaft ist. Die Scheibe kann auch weitere unbeschichtete Bereiche enthalten, beispielsweise Datentransmissionsfenster oder Kommunikationsfenster.

Die Erfindung umfasst weiter ein Verfahren zur Herstellung einer erfindungsgemäßen beheizbaren laminierten Seitenscheibe, mindestens umfassend
(a) Zurechtschneiden der thermoplastischen Zwischenschicht,
(b) Aufbringen von zwei Stromsammelschienen auf die Oberfläche der Zwischenschicht und Aufbringen und des Heizdrahtes auf die Oberfläche der thermoplastischen Zwischenschicht, wobei der Heizdraht mit beiden Stromsammelschienen elektrisch leitend verbunden wird,
(c) Anordnen der Zwischenschicht zwischen einer Außenscheibe und einer Innenscheibe,
(d) Verbinden der Außenscheibe mit der Innenscheibe über die Zwischenschicht durch Lamination.

Die Zwischenschicht wird in Form zumindest einer Folie bereitgestellt.

Die Stromsammelschienen und die Heizdrähte werden bevorzugt beim oder vor dem Aufbringen auf die Zwischenschicht zumindest bereichsweise erwärmt.

Das Anbringen der Stromsammelschienen kann insbesondere durch Auflegen erfolgen, aber auch durch Aufkleben. Das Erwärmen der Stromsammelschienen erfolgt beispielsweise mit einem Lötkolben. Durch das Erwärmen soll die thermoplastische Zwischenschicht leicht angeschmolzen und so mit der Stromschiene verbunden werden. Die Temperatur beträgt bevorzugt von 150 °C bis 240 °C.

Statt der Verwendung eines Lötkolbens ist es auch möglich, die Stromsammelschiene mit einem Plotter und einem beheizbaren Rad auf die Zwischenschicht aufzubringen.

Soll der Heizdraht zwischen zwei Stromsammelschienen sandwichartig angeordnet werden, so wird die obere Stromsammelschiene (also diejenige, die beim Auflegen auf die Zwischenschicht einen größeren Abstand zur Zwischenschicht aufweist) bevorzugt mit einer höheren Temperatur fixiert, beispielsweise von 300 °C bis 360 °C).

Das Aufbringen des Heizdrahtes erfolgt bevorzugt mit einem sogenannten Plotter. Dabei wird der Heizdraht mit einem Roboterarm bewegt und von einer Spule abgewickelt. Der Heizdraht wird bevorzugt erhitzt beim Aufbringen, so dass die thermoplastische Zwischenschicht anschmilzt und sich mit dem Heizdraht verbindet. Insbesondere soll der Heizdraht vollständig oder teilweise in die Oberfläche der Zwischenschicht eindringen, so dass er in der Zwischenschicht eingebettet ist.

Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe dabei erfolgt üblicherweise unter Einwirkung von Hitze, Vakuum und / oder Druck.

Die erfindungsgemäße Seitenscheibe wird bevorzugt in Fortbewegungsmitteln für den Verkehr auf dem Lande, in der Luft oder zu Wasser verwendet, insbesondere in Kraftfahrzeugen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Ausgestaltung der erfindungsgemäßen Seitenscheibe,
- Fig. 2: einen Schnitt entlang A-A' durch die Seitenscheibe aus Figur 1,
- Fig. 3: einen Schnitt entlang B-B' durch die Seitenscheibe aus Figur 1,
- Fig. 4: eine Draufsicht auf eine weitere Ausgestaltung der Seitenscheibe,
- Fig. 5: einen Schnitt entlang B-B' durch die weitere Ausgestaltung der Seitenscheibe,
- Fig. 6: einen Schnitt entlang B-B' durch die weitere Ausgestaltung der Seitenscheibe,
- Fig. 7: eine Draufsicht auf eine weitere Ausgestaltung der Seitenscheibe,
- Fig. 8: einen Schnitt entlang C-C' durch die Seitenscheibe aus Figur 7 und
- Fig. 9: ein Flussdiagramm einer Ausführungsform des erfindungsgemäßen Verfahrens.

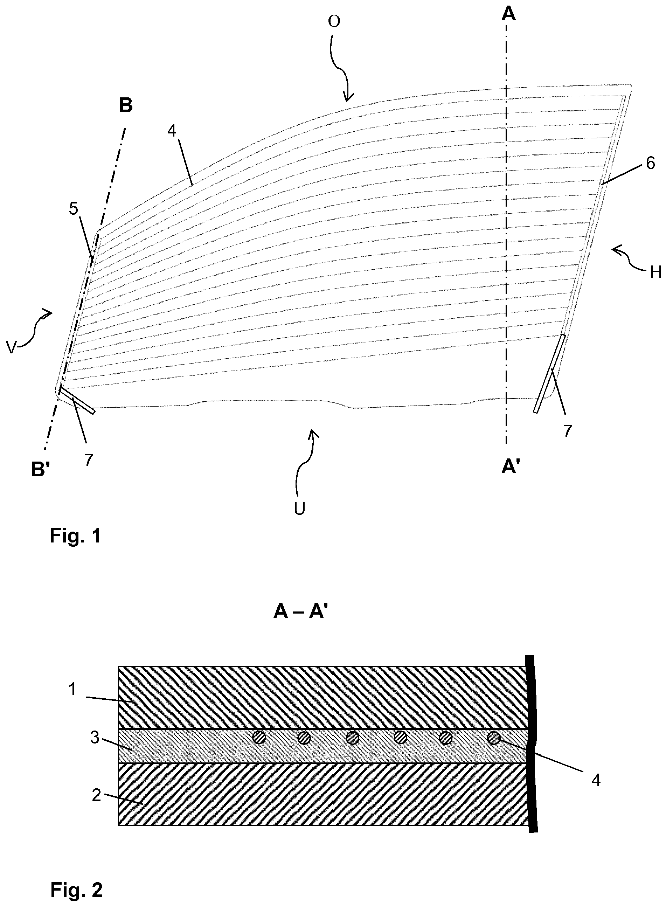

Fig. 1, Fig. 2 und Fig. 3 zeigen je ein Detail einer Ausgestaltung der erfindungsgemäßen beheizbaren laminierten Seitenscheibe. Die Seitenscheibe für das Seitenfenster eines Personenkraftwagens vorgesehen, welches sich durch Herunterfahren der Seitenscheibe öffnen lässt. Die Seitenscheibe weist eine Vorderkante V, eine Hinterkante H, eine Oberkante O und eine Unterkante U auf. Die Kanten sind entsprechend der Einbaulage in Fahrtrichtung bezeichnet.

Die Seitenscheibe ist ein Verbundglas aus einer Außenscheibe 1, einer Innenscheibe 2 und einer Zwischenschicht 3, welche die beiden Scheiben miteinander verbindet. Die Außenscheibe 1 und die Innenscheibe 2 bestehen aus Kalk-Natron-Glas und weisen beispielsweise eine Dicke von jeweils 2,1 mm auf. Die Zwischenschicht 3 ist durch eine Folie aus PVB gebildet mit einer Dicke von 0,76 mm.

In die Zwischenschicht 3 eingebettet sind 18 Heizdrähte 4. Die Heizdrähte bestehen beispielsweise aus Kupfer oder Wolfram und weisen eine Dicke von 30 µm auf. Jeder Heizdraht 4 ist mit einer ersten Stromsammelschiene 5 und einer zweiten Stromsammelschiene 6 elektrisch kontaktiert. Die Stromsammelschienen 5, 6 sind als Streifen einer Kupferfolie ausgebildet mit einer Dicke von beispielsweise 100 µm und einer Breite von beispielsweise 7 mm. Wird an die Stromsammelschienen 5, 6 eine Spannung angelegt, so fließt ein Strom durch die Heizdrähte 4, wodurch die Heizwirkung entsteht. Die Spannung kann die übliche KFZ-Bordspannung von 14 V sein, oder auch eine Spannung von beispielsweise 42 V oder 48 V.

Die erste Stromsammelschiene 5 verläuft entlang der Vorderkante V der Seitenscheibe, die zweite Stromsammelschiene 6 verläuft entlang der Hinterkante H. Der maximale Abstand der Stromsammelschienen zu der Kante, entlang derer sie verlaufen, beträgt beispielsweise 2 cm. Entgegen der bislang vorherrschenden Auffassung zum Design gattungsgemäßer Seitenscheiben sind die Stromsammelschienen 5, 6 auch im geöffneten Zustand des Seitenfensters für einen Betrachter nicht sichtbar. Stattdessen sind die Stromsammelschienen 5, 6 von Karosserieteilen und Dichtlippen typischer Seitenfenster abgedeckt. Der minimale Abstand beträgt beispielsweise 6 mm. Dieser Abstand ist ausreichend, um eine Störung der Stabilität des Laminats und ein Eindringen von Luft zu verhindern.

Die Heizdrähte 4 verlaufen ohne starke Krümmungen von der ersten Stromsammelschiene 5 zur zweiten Stromsammelschiene 6. Dadurch können lokale Überhitzungen vermieden werden. Zudem ist die Gestaltung optisch ansprechend. Die Heizdrähte 4 weisen lediglich eine geringe, mit kleiner werdendem Abstand zur Oberkante O zunehmende Krümmung auf. Dadurch wird trotz der komplexen Scheibenform mit der gekrümmten Oberkante O eine gleichmäßige Verteilung der Heizleistung erreicht.

Der Abstand benachbarter Heizdrähte 4 nimmt von der Hinterkante H zur Vorderkante V ab. Dadurch wird im vorderen Bereich der Scheibe eine höhere Heizleistung erreicht. Die Scheibe wird dort also schneller enteist oder von Beschlag befreit, wodurch der Blick auf die Seitenspiegel vorteilhafterweise schneller freigegeben wird.

Die Seitenscheibe verfügt weiter über zwei Zuleitungen 7. Jede Zuleitung 7 ist mit einer Stromsammelschiene 5, 6 elektrisch kontaktiert und verläuft gerade zur Unterkante U, wo sie mit einem Verbindungskabel zur externen Spannungsversorgung kontaktiert werden können.

Die kontaktierten Bereiche der Heizleiter 4 sind zwischen den Stromsammelschienen 5, 6 und der thermoplastischen Folie angeordnet, welche die Zwischenschicht 3 ausbildet, wie im Querschnitt zu erkennen ist.

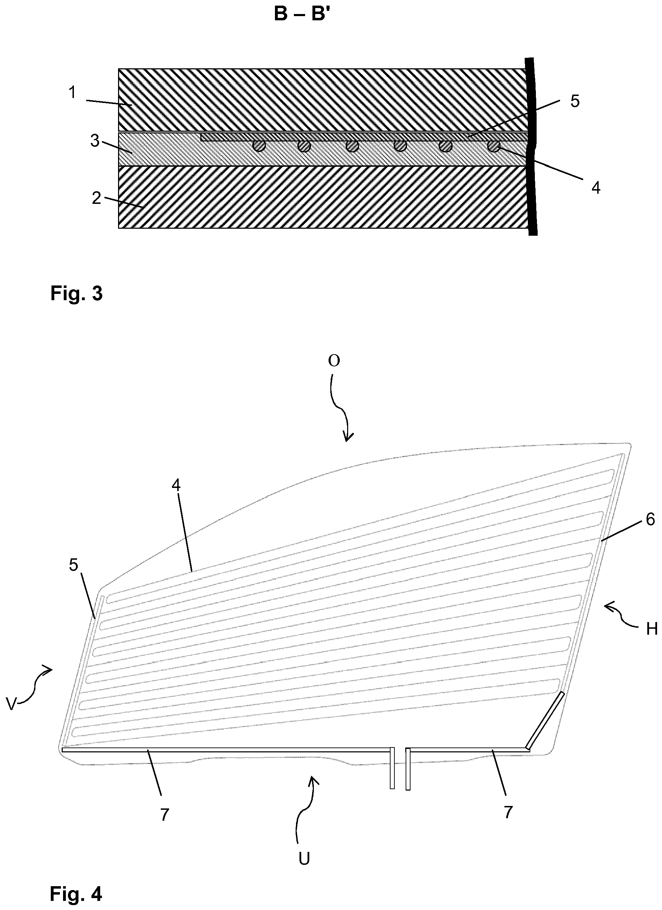

Fig. 4 zeigt eine weitere Ausgestaltung der erfindungsgemäßen laminierten Seitenscheibe. Die Scheibe ist ähnliche der vorstehenden Ausgestaltung ausgebildet. Die einzigen Unterschiede bestehen im Verlauf der Heizdrähte 4 und der Zuleitungen 7.

Die Seitenscheibe weist nur sechs Heizdrähte 4 mit einer Dicke von beispielsweise 70 µm auf. Jeder Heizdraht 4 hat einen mäanderförmigen Verlauf. Jeder Heizdraht 4 erstreckt sich ausgehend von der ersten Stromsammelschiene 5 gerade in Richtung der zweiten Stromsammelschiene 6. Kurz vor Erreichen der zweiten Stromsammelschiene 6 nimmt der Heizdraht 4 einen Verlauf nach Art einer Kehrschleife und erstreckt sich gerade zurück in Richtung der ersten Stromsammelschiene 5. Nach einer weiteren Kehrschleife verläuft der Heizdraht 4 zurück zur zweiten Stromsammelschiene 6, an der er elektrisch angeschlossen ist.

Durch die Gestaltung der Heizdrähte 4 ergeben sich gleichsam 18 Heizleiter zwischen den Stromsammelschienen 5, 6 ähnlich der vorstehend beschriebenen Ausgestaltung. Allerdings sind jeweils drei dieser Heizleiter durch einen einzigen, mäanderförmig verlaufenden Heizdraht 4 ausgebildet. Die einzelnen Heizdrähte 4 sind daher deutlich länger. Dadurch wird die Heizleistung verringert. Eine zu hohe Heizleistung, wie sie sich aufgrund der dickeren Heizdrähte 4 ergeben würde, kann so vermieden werden.

Die Zuleitungen 7 sind weisen jeweils einen Abschnitt auf, der entlang der Unterkante U verläuft. Die Enden der Zuleitungen 7, die mit den externen Verbindungskabeln zur Spannungsversorgung vorgesehen sind, sind so zueinander geführt und weisen einen Abstand von beispielsweise 12 mm auf. Ihr geringer gegenseitiger Abstand kann anschlusstechnische Vorteile aufweisen.

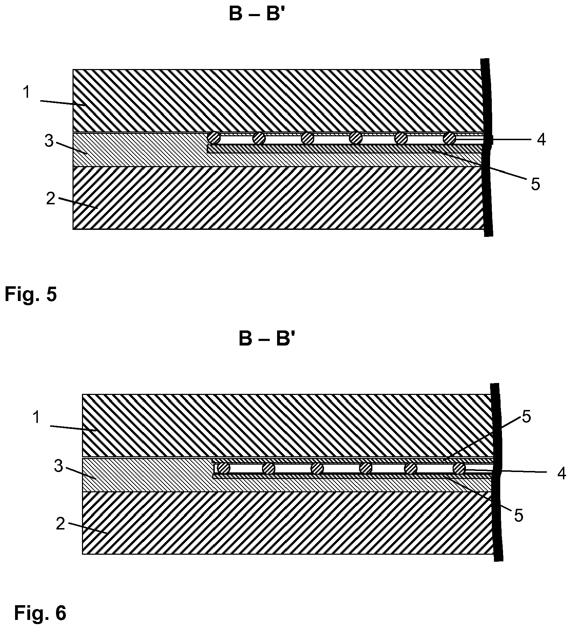

Fig. 5 zeigt eine alternative relative Anordnung von Heizdrähten 4, Stromsammelschiene 5 und Zwischenschicht 3. Die Stromsammelschiene 5 ist zwischen den kontaktierten Bereichen der Heizleiter 4 und der thermoplastischen Folie angeordnet, welche die Zwischenschicht 3 ausbildet. In der Figur ist die Scheibe nur der Einfachheit halber mit Leerräumen in den Bereichen zwischen den Heizdrähten 4 dargestellt. In der Realität werden sich die Stromsammelschiene 5 und die Zwischenschicht 3 unter Druckeinwirkung so um die Heizdrähte 4 anordnen, dass keine größeren Leerräume entstehen.

Fig. 6 zeigt eine weitere alternative relative Anordnung von Heizdrähten 4, Stromsammelschiene 5 und Zwischenschicht 3. Die elektrische Kontaktierung erfolgt hier mittels zweier Stromsammelschienen 5 gleicher elektrischer Polarität, zwischen denen die Heizdrähte 4 sandwichartig angeordnet sind. In dieser Ausgestaltung können dünnere Folien als Stromsammelschienen 5 verwendet werden als in den vorstehend gezeigten, beispielsweise mit einer Dicke von 50 µm.

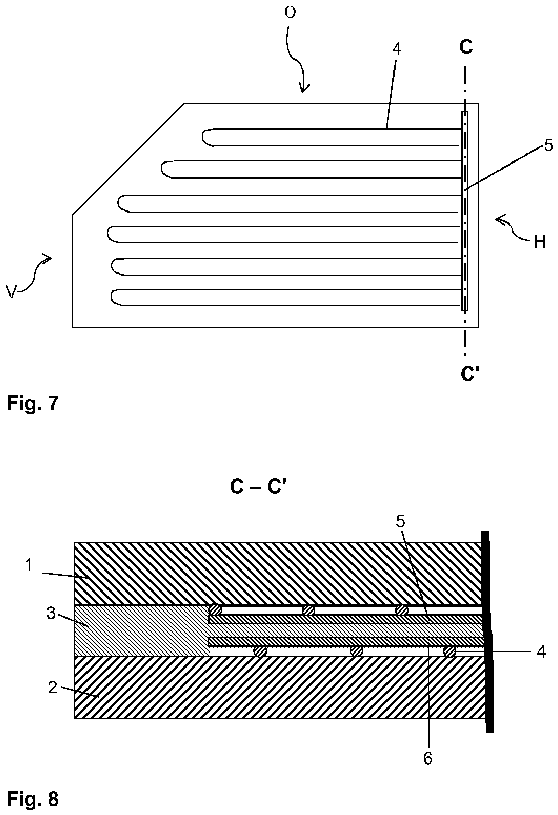

Fig. 7 und Fig. 8 zeigen je ein Detail einer weiteren Ausgestaltung der erfindungsgemäßen beheizbaren laminierten Seitenscheibe. Die beiden Stromsammelschienen 5, 6 sind entlang derselben Kante, nämlich der Hinterkante H angeordnet. Die Seitenscheibe weist sechs Heizdrähte 4 auf. Jeder Heizdraht 4 verläuft ausgehend von der ersten Stromsammelschiene 5 etwa horizontal in die Nähe der Vorderkante V, nimmt dort einen Verlauf nach Art einer Kehrschleife und verläuft etwa horizontal zurück zur zweiten Stromsammelschiene 6. Die Stromsammelschienen 5, 6 sind in Deckung zueinander angeordnet. Um die Stromsammelschienen 5, 6 elektrisch voneinander zu isolieren, sind sie auf unterschiedlichen Seiten der thermoplastischen Folie angeordnet, welche die Zwischenschicht 3 ausbildet. Jeder Heizdraht 4 verläuft einmal durch die Zwischenschicht 3 hindurch. Jeder Heizdraht 4 besteht also aus zwei Bereichen, wobei der eine Bereich in die eine Oberfläche der Zwischenschicht 3 eingelagert ist und der andere Bereich in die entgegengesetzte Oberfläche der Zwischenschicht 3 eingelagert ist. Der Heizdraht 4 kann dazu durch ein in die thermoplastische Folie eingebrachtes Loch hindurchgesteckt werden.

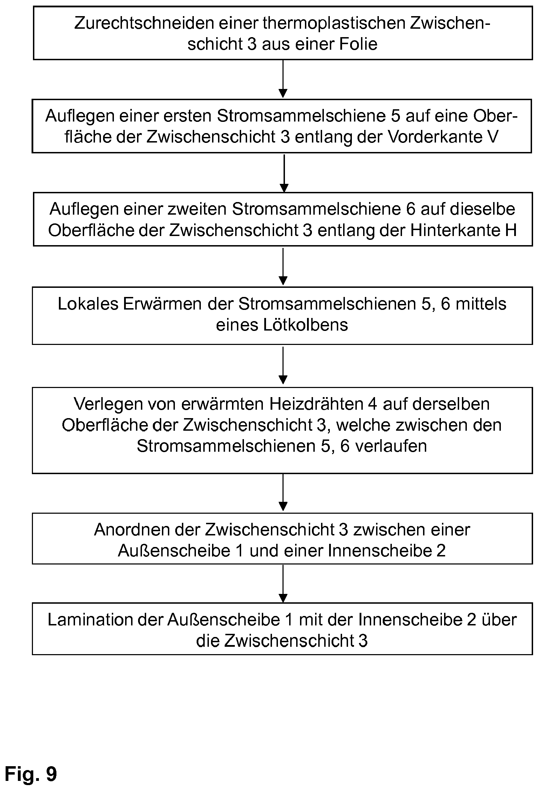

Fig. 9 zeigt ein Flussdiagramm eines Ausführungsbeispiels des erfindungsgemäßen Verfahrens zur Herstellung einer erfindungsgemäßen laminierten beheizbaren Seitenscheibe.

In einer alternativen Ausführung können die Stromsammelschienen 5, 6 auf den entgegengesetzten Oberflächen der Zwischenschicht 3 angeordnet werden, insbesondere wenn sie in Deckung zueinander angeordnet werden sollen. In diesem Fall wird das Verlegen der Heizdrähte 4 einmal unterbrochen, die Heizdrähte durch die Zwischenschicht hindurch geführt und das Verlegen anschließend auf der entgegengesetzten Oberfläche fortgesetzt.

### Bezugszeichenliste:

- (1): Außenscheibe
- (2): Innenscheibe
- (3): thermoplastische Zwischenschicht
- (4): Heizdraht
- (5): erste Stromsammelschiene
- (6): zweite Stromsammelschiene
- (7): Zuleitung

- H: Hinterkante der Seitenscheibe
- O: Oberkante der Seitenscheibe
- V: Vorderkante der Seitenscheibe
- U: Unterkante der Seitenscheibe

- A-A': Schnittlinie
- B-B': Schnittlinie
- C-C': Schnittlinie

## Patentansprüche

1. Beheizbare laminierte Seitenscheibe für ein öffenbares Seitenfenster eines Fahrzeugs, mit einer Oberkante (O), einer Unterkante (U), einer Vorderkante (V) und einer Hinterkante (H), mindestens umfassend eine Außenscheibe (1) und eine Innenscheibe (2), welche über eine thermoplastische Zwischenschicht (3) miteinander verbunden sind, und mindestens einen in die Zwischenschicht (3) eingebetteten Heizdraht (4), welcher zwischen einer ersten Stromsammelschiene (5) und einer zweiten Stromsammelschiene (6) verläuft und mit den Stromsammelschienen (5, 6) elektrisch leitend verbunden ist, wobei
die erste Stromsammelschiene (5) und die zweite Stromsammelschiene (6) entlang der Vorderkante (V) oder der Hinterkante (H) angeordnet sind,
wobei der maximale Abstand der Stromsammelschienen (5, 6) von derjenigen Kante, entlang derer sie angeordnet sind, kleiner 3 cm beträgt und
wobei der minimale Abstand der Stromsammelschienen (5, 6) von derjenigen Kante, entlang derer sie angeordnet sind, größer 3 mm beträgt,
wobei der Abstand benachbarter Heizdrähte (4) oder Heizdrahtabschnitte von der Hinterkante (H) zur Vorderkante (V) zumindest abschnittsweise abnimmt.

2. Seitenscheibe nach Anspruch 1, wobei die erste Stromsammelschiene (5) entlang der Vorderkante (V) und die zweite Stromsammelschiene (6) entlang der Hinterkante (H) angeordnet ist.

3. Seitenscheibe nach Anspruch 1, wobei die erste Stromsammelschiene (5) und die zweite Stromsammelschiene (6) entlang derselben Kante (V, H) angeordnet sind.

4. Seitenscheibe nach Anspruch 3, wobei die erste Stromsammelschiene (5) und die zweite Stromsammelschiene (6) überlappend auf den gegenüberliegenden Oberflächen der Zwischenschicht angeordnet sind.

5. Seitenscheibe nach einem der Ansprüche 1 bis 4, wobei der maximale Abstand der Stromsammelschienen (5, 6) von derjenigen Kante, entlang derer sie angeordnet sind, kleiner 2,5 cm, besonders bevorzugt kleiner 2 cm beträgt.

6. Seitenscheibe nach einem der Ansprüche 1 bis 5, wobei der minimale Abstand der Stromsammelschienen (5, 6) von derjenigen Kante, entlang derer sie angeordnet sind, größer 5 mm beträgt.

7. Seitenscheibe nach einem der Ansprüche 1 bis 6, wobei die Stromsammelschienen (5, 6) als Streifen einer elektrisch leitfähigen Folie ausgebildet sind, die bevorzugt Kupfer enthält.

8. Seitenscheibe nach einem der Ansprüche 1 bis 7, wobei die Dicke der Stromsammelschienen (5, 6) von 10 µm bis 500 µm, bevorzugt von 30 µm bis 200 µm beträgt.

9. Seitenscheibe nach einem der Ansprüche 1 bis 8, wobei die Breite der Stromsammelschienen (5, 6) von 2 mm bis 20 mm, bevorzugt von 5 mm bis 10 mm beträgt.

10. Seitenscheibe nach einem der Ansprüche 1 bis 9, welche mindestens eine, mit einer Stromsammelschiene (5, 6) elektrisch verbundene Zuleitung (7) aufweist, welche zur Unterkante (U) verläuft.

11. Seitenscheibe nach Anspruch 10, wobei beide Stromsammelschienen (5, 6) mit jeweils einer Zuleitung (7) versehen sind und wobei die den Stromsammelschienen (5, 6) entgegengesetzten Enden der Zuleitungen (7) einen Abstand voneinander von kleiner oder gleich 30 mm, bevorzugt kleiner oder gleich 20 mm, besonders bevorzugt kleiner oder gleich 20 mm aufweisen.

12. Seitenscheibe nach einem der Ansprüche 1 bis 10, wobei der Heizdraht (4) Kupfer und/oder Wolfram enthält und wobei die Dicke des Heizdrahts (4) von 10 µm bis 200 µm beträgt.

13. Verfahren zur Herstellung einer beheizbaren laminierten Seitenscheibe nach einem der Ansprüche 1 bis 12, mindestens umfassend:
(a) Zurechtschneiden der thermoplastischen Zwischenschicht (3),
(b) Aufbringen von zwei Stromsammelschienen (5, 6) auf die Oberfläche der Zwischenschicht (3) und Aufbringen des Heizdrahtes (4) auf die Oberfläche der thermoplastischen Zwischenschicht (3), wobei der Heizdraht (4) mit beiden Stromsammelschienen (5, 6) elektrisch leitend verbunden wird,
(c) Anordnen der Zwischenschicht (3) zwischen einer Außenscheibe (1) und einer Innenscheibe (2),
(d) Verbinden der Außenscheibe (1) mit der Innenscheibe (2) über die Zwischenschicht (3) durch Lamination.

14. Verwendung einer Seitenscheibe nach einem der Ansprüche 1 bis 12 in Fortbewegungsmitteln für den Verkehr auf dem Lande, in der Luft oder zu Wasser, insbesondere in Kraftfahrzeugen.

## Claims

1. Heatable laminated side pane for an openable side window of a motor vehicle, with an upper edge (O), a lower edge (U), a front edge (V), and a rear edge (H), at least comprising an outer pane (1) and an inner pane (2), which are bonded to one another via a thermoplastic intermediate layer (3), and at least one heating wire (4) embedded in the intermediate layer (3), which heating wire runs between a first busbar (5) and a second busbar (6) and is electrically conductively connected to the busbars (5, 6), wherein
the first busbar (5) and the second busbar (6) are arranged along the front edge (V) or the rear edge (H),
wherein the maximum distance of the busbars (5, 6) from that edge, along which they are arranged, is less than 3 cm, and
wherein the minimum distance of the busbars (5, 6) from that edge, along which they are arranged, it is greater than 3 mm,
wherein the distance between adjacent heating wires (4) or heating wire sections decreases from the rear edge (H) to the front edge (V) at least in sections.

2. Side pane according to claim 1, wherein the first busbar (5) is arranged along the front edge (V) and the second busbar (6) is arranged along the rear edge (H).

3. Side pane according to claim 1, wherein the first busbar (5) and the second busbar (6) are arranged along the same edge (V, H).

4. Side pane according to claim 3, wherein the first busbar (5) and the second busbar (6) are arranged overlappingly on the opposite surfaces of the intermediate layer.

5. Side pane according to one of claims 1 through 4, wherein the maximum distance of the busbars (5, 6) from that edge along which they are arranged is less than 2.5 cm, particularly preferably less than 2 cm.

6. Side pane according to one of claims 1 through 5, wherein the minimum distance of the busbars (5, 6) from that edge along which they are arranged is greater than 5 mm.

7. Side pane according to one of claims 1 through 6, wherein the busbars (5, 6) are implemented as strips of an electrically conductive foil, which preferably contains copper.

8. Side pane according to one of claims 1 through 7, wherein the thickness of the busbars (5, 6) is from 10 µm to 500 µm, preferably from 30 µm to 200 µm.

9. Side pane according to one of claims 1 through 8, wherein the width of the busbars (5, 6) is from 2 mm to 20 mm, preferably from 5 mm to 10 mm.

10. Side pane according to one of claims 1 through 9, which has at least one supply line (7) electrically connected to a busbar (5, 6), which supply line runs to the lower edge (U).

11. Side pane according to claim 10, wherein both busbars (5, 6) are in each case provided with a supply line (7) and wherein the ends of the supply lines (7) opposite the busbars (5, 6) have a distance between them of less than or equal to 30 mm, preferably less than or equal to 20 mm, particularly preferably less than or equal to 20 mm.

12. Side pane according to one of claims 1 through 10, wherein the heating wire (4) contains copper and/or tungsten and wherein the thickness of the heating wire (4) is from 10 µm to 200 µm.

13. Method for producing a heatable laminated side pane according to one of claims 1 through 1, at least comprising:
(a) Cutting the thermoplastic intermediate layer (3) to size,
(b) Applying two busbars (5, 6) on the surface of the intermediate layer (3) and applying the heating wire (4) on the surface of the thermoplastic intermediate layer (3), wherein the heating wire (4) is electrically conductively connected to both busbars (5, 6),
(c) Arranging the intermediate layer (3) between an outer pane (1) and an inner pane (2),
(d) Bonding the outer pane (1) to the inner pane (2) via the intermediate layer (3) by lamination.

14. Use of a side pane according to one of claims 1 through 12 in means of transportation for travel on land, in the air, or on water, in particular in motor vehicles.

## Revendications

1. Vitre latérale feuilletée pouvant être chauffée pour une fenêtre latérale d'un véhicule pouvant être ouverte, avec un bord supérieur (O), un bord inférieur (U), un bord avant (V) et un bord arrière (H), comprenant au moins une vitre extérieure (1) et une vitre intérieure (2), qui sont reliées entre elles par une couche thermoplastique intermédiaire (3) et au moins un fil chauffant (4) incorporé dans la couche intermédiaire (3), qui s'étend entre un premier bus d'alimentation (5) et un deuxième bus d'alimentation (6) et est connecté aux bus d'alimentation (5, 6) de manière conductrice d'électricité, où
le premier bus d'alimentation (5) et le deuxième bus d'alimentation (6) sont disposés le long du bord avant (V) ou du bord arrière (H),
où la distance maximale des bus d'alimentation (5, 6) du bord, le long duquel ils sont disposés, est inférieure à 3 cm et
où la distance minimale des bus d'alimentation (5, 6) du bord, le long duquel ils sont disposés, est supérieure à 3 mm,
où la distance entre fils chauffants voisins (4) ou sections de fils chauffants diminue depuis le bord arrière (H) vers le bord avant (V), au moins par sections.

2. Vitre latérale selon la revendication 1, où le premier bus d'alimentation (5) est disposé le long du bord avant (V) et le deuxième bus d'alimentation (6) est disposé le long du bord arrière (H).

3. Vitre latérale selon la revendication 1, où la première barre de puissance (5) et la deuxième barre de puissance (6) sont disposées le long du même bord (V, H).

4. Vitre latérale selon la revendication 3 où le premier bus d'alimentation (5) et le deuxième bus d'alimentation (6) sont disposés se chevauchant aux surfaces opposées de la couche intermédiaire.

5. Vitre latérale selon l'une des revendications 1 à 4, où la distance maximale des bus d'alimentation (5, 6) du bord, le long duquel ils sont disposés, est inférieure à 2,5 cm, de manière particulièrement préférée inférieure à 2 cm.

6. Vitre latérale selon l'une des revendications 1 à 5, où la distance minimale des bus d'alimentation (5, 6) du bord, le long duquel ils sont disposés, est supérieure à 5 mm.

7. Vitre latérale selon l'une des revendications 1 à 6, où les bus d'alimentation (5, 6) sont formés comme bandes d'une feuille conductrice d'électricité, qui de préférence contient du cuivre.

8. Vitre latérale selon l'une des revendications 1 à 7, où l'épaisseur des bus d'alimentation (5, 6) est de 10 µm à 500 µm, de préférence de 30 µm à 200 µm est.

9. Vitre latérale selon l'une des revendications 1 à 8, où la largeur des bus d'alimentation (5, 6) est de 2 mm à 20 mm, de préférence de 5 mm à 10 mm.

10. Vitre latérale selon l'une des revendications 1 à 9, qui présente au moins une ligne d'alimentation (7) reliée électriquement aux bus d'alimentation (5, 6), qui s'étend vers le bord inférieur (U).

11. Vitre latérale selon la revendication 10, où les deux bus d'alimentation (5, 6) sont équipés chacun d'une ligne d'alimentation (7) et ou la distance entre les extrémités des lignes d'alimentation (7) à l'opposé des bus d'alimentation (5, 6) est inférieure ou égale à 30 mm, de préférence inférieure ou égale à 20 mm, de manière particulièrement préférée inférieure ou égale à 20 mm.

12. Vitre latérale selon l'une des revendications 1 à 10, où le fil chauffant contient du cuivre (4) ou du tungstène et l'épaisseur du fil chauffant (4) est de 10 µm à 200 µm.

13. Méthode de fabrication d'une vitre latérale feuilletée pouvant être chauffée selon l'une des revendications 1 à 12, comprenant au moins:
(a) le découpage de la couche thermoplastique (3),
(b) l'application de deux bus d'alimentation (5, 6) sur la surface de la couche intermédiaire (3) et application du fil chauffant (4) sur la surface de la couche intermédiaire thermoplastique (3), où le fil chauffant (4) est connecté aux deux bus d'alimentation (5, 6) de manière conductrice d'électricité,
(c) l'agencement de la couche intermédiaire (3) entre une vitre extérieure (1) et une vitre intérieure (2)
(d) la connexion de la vitre extérieure (1) à la vitre intérieure par le biais de la couche intermédiaire (3) par feuilletage.

14. Utilisation d'une fenêtre latérale selon l'une des revendications 1 à 12 dans les moyens de locomotion pour la circulation sur la terre, dans l'air ou sur l'eau, en particulier dans les véhicules automobiles.
